# EUROPÄISCHE PATENTSCHRIFT

(11) **EP 3 165 075 B1**
(45) Veröffentlichungstag und Bekanntmachung des Hinweises auf die Patenterteilung: **11.12.2019**
(21) Anmeldenummer: 16192316.4
(22) Anmeldetag: 05.10.2016
(51) Int. Cl.: A01D 34/00, A01G 25/16

(54) **GARTENSENSORVORRICHTUNG**
GARDEN SENSOR DEVICE
DISPOSITIF DE CAPTEUR DE JARDIN

(30) Priorität: 04.11.2015 DE 102015221658
(43) Veröffentlichungstag der Anmeldung: 10.05.2017
(73) Patentinhaber: ROBERT BOSCH GMBH, 70442 Stuttgart (DE)
(72) Erfinder: Graefenstein, Juergen, Stowmarket, IP14 1EY (GB); Armstrong, Gavin Ben, Tostock Suffork, IP309GH (GB)

(56) Entgegenhaltungen:
- EP-A1- 0 762 146
- EP-A2- 2 390 741
- CN-A- 103 278 844
- US-A1- 2013 041 526
- US-A1- 2015 100 168

## Beschreibung

### Stand der Technik

Aus WO 2015/022672 A2 ist bereits eine Gartensensorvorrichtung mit zumindest einer Sensoreinheit zu einer Erfassung von zumindest einer gartenspezifischen Kenngröße bekannt. Die Gartensensorvorrichtung umfasst zumindest einen Grundkörper, an dem die Sensoreinheit angeordnet ist, zumindest eine Fixierungseinheit zumindest zu einer Fixierung des Grundkörpers an einem Untergrund und zumindest eine Energieversorgungsschnittstelle zu einer Verbindung mit einem Einfassungsdraht zumindest zu einer Energieversorgung der Sensoreinheit.

US 2015/0100168 A1 und EP 0762 146 A1 veranschaulichen zwei Ausführungsformen von Gartensensorvorrichtung und EP 2 390 741 A2 veranschaulicht ein Managementsystem für autonome Maschinen auf Basis von Grenzknoten.

### Offenbarung der Erfindung

Die Erfindung gemäß dem Anspruch 1 geht aus von einer Gartensensorvorrichtung mit zumindest einer Sensoreinheit zu einer Erfassung von zumindest einer gartenspezifischen Kenngröße, mit zumindest einem Grundkörper, an dem die Sensoreinheit angeordnet ist, mit zumindest einer Fixierungseinheit zumindest zu einer Fixierung des Grundkörpers an einem Untergrund, insbesondere an einem Untergrund eines Gartens, und mit zumindest einer Energieversorgungsschnittstelle zu einer Verbindung mit einem Einfassungsdraht zumindest zu einer Energieversorgung der Sensoreinheit.

Es wird vorgeschlagen, dass die Gartensensorvorrichtung zumindest eine Aufnahmeeinheit umfasst, mittels derer der Einfassungsdraht an dem Grundkörper und/oder an der Fixierungseinheit anordenbar ist. Unter einer "gartenspezifischen Kenngröße" soll hier insbesondere eine Kenngröße verstanden werden, die einen Zustand eines Gartens, die eine Beschaffenheit eines Gartens und/oder die eine Auswirkung einer Umwelteinwirkung auf einen Garten definiert. Die gartenspezifische Kenngröße kann als PH-Wert eines Bodens, insbesondere einer Gartenerde, des Gartens, als Feuchtigkeit eines Bodens, insbesondere einer Gartenerde, des Gartens, eine Temperatur eines Bodens, insbesondere einer Gartenerde, des Gartens, eine Lichtintensität, insbesondere eine Sonnenstrahlenintensität, in einem Gartenbereich des Gartens, eine Pflanzenartenanhäufung in einem Gartenbereich des Gartens, als eine Luftqualität, als ein Umgebungsdruck, insbesondere als Luftdruck, als Umgebungstemperatur o. dgl. ausgebildet sein.

Die zumindest eine Sensoreinheit umfasst vorzugsweise zumindest ein Sensorelement, das zu einer Erfassung von zumindest einer gartenspezifischen Kenngröße vorgesehen ist. Unter "vorgesehen" soll insbesondere speziell programmiert, speziell ausgelegt und/oder speziell ausgestattet verstanden werden. Darunter, dass ein Element und/oder eine Einheit zu einer bestimmten Funktion vorgesehen ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt. Bevorzugt ist das zumindest eine Sensorelement an der Fixierungseinheit angeordnet oder zumindest teilweise einteilig mit einem Fixierelement der zumindest einen Fixierungseinheit ausgebildet. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Das zumindest eine Sensorelement ist bevorzugt an einem als Erdnagel ausgebildeten Fixierelement der zumindest einen Fixierungseinheit angeordnet oder zumindest teilweise einteilig mit diesem ausgebildet. Es ist jedoch auch denkbar, dass das Fixierelement der zumindest einen Fixierungseinheit, an dem das zumindest eine Sensorelement angeordnet ist oder mit dem das zumindest eine Sensorelement zumindest teilweise einteilig ausgebildet ist, eine andere, einem Fachmann als sinnvoll erscheinende Ausgestaltung aufweist, wie beispielsweise eine Ausgestaltung als Zeltnagel, als Hering, als Erdhaken, als Erdanker o. dgl. Zudem ist es auch denkbar, dass das zumindest eine Sensorelement alternativ an einer anderen, einem Fachmann als sinnvoll erscheinenden Position an der Gartensensorvorrichtung angeordnet ist, wie beispielsweise an dem zumindest einen Grundkörper. Vorzugsweise weist die zumindest eine Sensoreinheit eine Vielzahl an Sensorelementen auf, die dazu vorgesehen sind, verschiedene gartenspezifische Kenngrößen zu erfassen. Bevorzugt ist die zumindest eine Sensoreinheit zu einer Erfassung von einer Vielzahl an gartenspezifischen Kenngrößen, insbesondere verschiedenen gartenspezifischen Kenngrößen, vorgesehen.

Besonders bevorzugt umfasst die Gartensensorvorrichtung oder die zumindest eine Sensoreinheit zumindest eine Auswerteeinheit, die dazu vorgesehen ist, die zumindest eine erfasste gartenspezifische Kenngröße auszuwerten. Die zumindest eine Auswerteeinheit ist vorzugsweise als elektronische Auswerteeinheit ausgebildet, wie beispielsweise als Prozessoreinheit, insbesondere als Mikroprozessoreinheit, o. dgl. Die zumindest eine Auswerteeinheit weist eine, einem Fachmann bereits bekannte Ausgestaltung und/oder Funktionsweise auf. Die zumindest eine Auswerteeinheit ist vorzugsweise mittels zumindest einer Datenschnittstelle (drahtlos und/oder drahtgebunden) zu einer elektronischen Datenübertragung auf eine, einem Fachmann bereits bekannte Art und Weise zumindest mit der zumindest einen Sensoreinheit verbunden. Die zumindest eine Auswerteeinheit kann alternativ oder zusätzlich auch mit einer oder mehreren weiteren Einheit/en mittels zumindest einer Datenschnittstelle (drahtlos und/oder drahtgebunden) zu einer elektronischen Datenübertragung verbunden sein.

Der zumindest eine Grundkörper bildet vorzugsweise zumindest teilweise eine Umhausung für die zumindest eine Sensoreinheit. Vorzugsweise bildet der zumindest eine Grundkörper ein Gehäuse für die zumindest eine Sensoreinheit und/oder weitere Einheiten der Gartensensorvorrichtung. Der zumindest eine Grundkörper kann aus einem Kunststoff, aus einem Metall, aus einer Legierung, aus einem Mischwerkstoff und/oder aus einem anderen, einem Fachmann als sinnvoll erscheinenden Material gebildet sein. Vorzugsweise ist der zumindest eine Grundkörper zumindest teilweise einteilig mit der zumindest einen Fixierungseinheit ausgebildet. Es ist jedoch auch denkbar, dass der zumindest eine Grundkörper separat zu der zumindest einen Fixierungseinheit ausgebildet ist und mittels einer kraftschlüssigen und/oder formschlüssigen Verbindung an der Fixierungseinheit anordenbar ist.

Die zumindest eine Fixierungseinheit ist zumindest dazu vorgesehen, den zumindest einen Grundkörper an einem Untergrund, insbesondere an einem Boden eines Gartens (Gartenerde), zu fixieren. Die zumindest eine Fixierungseinheit umfasst vorzugsweise zumindest ein Fixierelement, das zumindest teilweise in einen Untergrund, insbesondere einen Boden eines Gartens (Gartenerde), einbringbar ist. Das zumindest eine Fixierelement kann als Erdnagel, als Zeltnagel, als Hering, als Erdhaken, als Erdanker oder als ein anderes, einem als Fachmann als sinnvoll erscheinendes Fixierelement ausgebildet sein.

Die zumindest eine Energieversorgungsschnittstelle zu einer Verbindung mit einem Einfassungsdraht kann zu einer kabellosen und/oder kabelgebundenen (kontaktgebundenen) Energieübertragung vorgesehen sein. Die zumindest eine Energieversorgungsschnittstelle kann als Stecker-Steckdosen-Schnittstelle, als Induktivschnittstelle o. dgl. ausgebildet sein. Vorzugsweise ist die zumindest eine Energieversorgungsschnittstelle zumindest dazu vorgesehen, in zumindest einem Zustand zumindest die Sensoreinheit mit elektrischer Energie zu versorgen. Die zumindest eine Energieversorgungsschnittstelle ist bevorzugt zumindest mit der zumindest einen Sensoreinheit elektrisch verbunden. Es ist jedoch denkbar, dass die zumindest eine Energieversorgungsschnittstelle alternativ oder zusätzlich mit zumindest einer oder mehreren weiteren Einheit/en elektrisch verbunden ist. Die zumindest eine Energieversorgungsschnittstelle ist bevorzugt zu einer Energieversorgung der gesamten Gartensensorvorrichtung vorgesehen. Alternativ oder zusätzlich zur Energieversorgungsschnittstelle kann die Gartensensorvorrichtung eine regenerative Energieversorgungseinheit zu einer Energieversorgung aufweisen, wie beispielsweise eine Solarenergieversorgungseinheit, eine Windkraftenergieversorgungseinheit o. dgl.

Der Begriff "Einfassungsdraht" soll hier einen energieführenden Begrenzungsdraht oder ein energieführendes Begrenzungskabel definieren, der oder das zumindest dazu vorgesehen ist, zumindest einen Arbeitsbereich, insbesondere innerhalb eines Gartens, eines autonomen Arbeitsgeräts, insbesondere eines autonomen Rasenmähers, zu begrenzen oder einem autonomen Arbeitsgerät eine Fahrstrecke vorzugeben. Der zumindest eine Einfassungsdraht ist vorzugsweise auf einer Gartenfläche des Gartens angeordnet. Es ist jedoch auch denkbar, dass der zumindest eine Einfassungsdraht in einer anderen, einem Fachmann als sinnvoll erscheinenden Weise im Garten angeordnet ist, um einen Arbeitsbereich eines autonomen Arbeitsgeräts, insbesondere eines autonomen Rasenmähers, zu begrenzen oder einem autonomen Arbeitsgerät eine Fahrstrecke vorzugeben, wie beispielsweise zumindest teilweise in einen Boden des Gartens eingegraben o. dgl.

Unter einer "Aufnahmeeinheit" soll hier insbesondere eine Einheit verstanden werden, die dazu vorgesehen ist, zumindest den Einfassungsdraht mittels einer formschlüssigen und/oder mittels einer kraftschlüssigen Verbindung am Grundkörper und/oder an der Fixierungseinheit anzuordnen, insbesondere direkt am Grundkörper und/oder an der Fixierungseinheit anzuordnen. Vorzugsweise liegt der zumindest eine Einfassungsdraht infolge einer Anordnung an der zumindest einen Aufnahmeeinheit direkt an dem zumindest einen Grundkörper und/oder an der zumindest einen Fixierungseinheit an und/oder ist mittels der zumindest einen Aufnahmeeinheit mittels einer form- und/oder kraftschlüssigen Verbindung mit dem zumindest einen Grundkörper und/oder mit der zumindest einen Fixierungseinheit verbunden. Die Aufnahmeeinheit ist bevorzugt an dem zumindest einen Grundkörper und/oder an der zumindest einen Fixierungseinheit angeordnet, insbesondere einteilig mit dem zumindest einen Grundkörper und/oder der zumindest einen Fixierungseinheit ausgebildet. Die zumindest eine Aufnahmeeinheit ist vorzugsweise in zumindest einem Ausführungsbeispiel der erfindungsgemäßen Gartensensorvorrichtung verschieden von einer Stecker-Steckdosen-Schnittstelle zu einer Energieversorgung ausgebildet. Mittels der erfindungsgemäßen Ausgestaltung kann eine konstruktiv einfache Fixierung der Gartensensorvorrichtung an dem Einfassungsdraht realisiert werden. Zudem kann vorteilhaft eine sichere Energieverbindung zwischen dem zumindest einen Einfassungsdraht und der zumindest einen Energieversorgungsschnittstelle realisiert werden, da durch die Aufnahmeeinheit eine sichere Anordnung des zumindest einen Einfassungsdrahts an dem zumindest einen Grundkörper und/oder an der zumindest einen Fixierungseinheit realisierbar ist. Ferner können vorteilhaft zusätzliche Befestigungselemente zu einer Befestigung des zumindest einen Einfassungsdrahts an einem Untergrund, insbesondere an einem Boden des Gartens, eingespart werden.

Des Weiteren wird vorgeschlagen, dass die Aufnahmeeinheit zumindest eine Aufnahmeausnehmung begrenzt, in der der Einfassungsdraht anordenbar ist. Vorzugsweise umfasst die Aufnahmeeinheit zumindest einen Fortsatz, der sich bevorzugt ausgehend von dem zumindest einen Grundkörper und/oder von der zumindest einen Fixierungseinheit, insbesondere von zumindest einem Fixierelement der zumindest einen Fixierungseinheit, in eine von dem zumindest einen Grundkörper und/oder von der zumindest einen Fixierungseinheit abgewandte Richtung erstreckt. Vorzugsweise ist der zumindest eine Fortsatz einteilig mit dem zumindest einen Grundkörper und/oder mit der zumindest einen Fixierungseinheit ausgebildet. Bevorzugt begrenzen der zumindest eine Fortsatz und der zumindest eine Grundkörper und/oder das zumindest eine Fixierelement der Fixierungseinheit zusammen zumindest teilweise die zumindest eine Aufnahmeausnehmung, in der der Einfassungsdraht anordenbar ist. Insbesondere liegt der Einfassungsdraht in zumindest einem in der Aufnahmeausnehmung angeordneten Zustand zumindest teilweise an dem Fortsatz, dem zumindest einen Grundkörper und/oder der zumindest einen Fixierungseinheit an. Der zumindest eine Fortsatz weist bevorzugt zumindest eine Haupterstreckungsrichtung auf, die zumindest im Wesentlichen parallel oder zumindest im Wesentlichen quer zu einer Haupterstreckungsrichtung der zumindest einen Fixierungseinheit verläuft. Besonders bevorzugt umfasst die zumindest eine Aufnahmeeinheit eine Vielzahl an Fortsätzen, die zusammen mit dem zumindest einen Grundkörper und/oder dem zumindest einen Fixierelement der Fixierungseinheit zumindest teilweise die zumindest eine Aufnahmeausnehmung, in der der Einfassungsdraht anordenbar ist, begrenzen. Es ist auch denkbar, dass die zumindest eine Aufnahmeeinheit einen weiteren Fortsatz umfasst, der beweglich gelagert ist und der dazu vorgesehen ist, zusammen mit dem Fortsatz, mit dem zumindest einen Grundkörper und/oder mit der zumindest einen Fixierungseinheit die zumindest eine Aufnahmeausnehmung, in der der Einfassungsdraht anordenbar ist, zu begrenzen. Vorzugsweise können zumindest der Fortsatz und der weitere Fortsatz zusammen eine Art von Schnappschäkel bilden, in der der Einfassungsdraht anordenbar ist. Mittels der erfindungsgemäßen Ausgestaltung kann vorteilhaft eine einfache Anordnung des Einfassungsdrahts an dem zumindest einen Grundkörper und/oder an der zumindest einen Fixierungseinheit erreicht werden. Zudem kann vorteilhaft ein Schutz für den Einfassungsdraht im Bereich der zumindest einen Aufnahmeausnehmung erreicht werden, da der Einfassungsdraht zumindest teilweise innerhalb der Aufnahmeausnehmung anordenbar ist.

Ferner wird vorgeschlagen, dass die Aufnahmeeinheit zumindest teilweise einteilig mit der Energieversorgungsschnittstelle ausgebildet ist, wobei infolge einer Anordnung des Einfassungsdrahts an der Aufnahmeeinheit zumindest eine elektrische Verbindung zur Energieversorgung der zumindest einen Sensoreinheit herstellbar ist. Vorzugsweise ist die zumindest eine Energieversorgungsschnittstelle zumindest teilweise in der Aufnahmeausnehmung angeordnet, die von der zumindest einen Aufnahmeeinheit zumindest teilweise begrenzt wird. Es ist denkbar, dass die zumindest eine Aufnahmeeinheit Kontaktstifte oder Kontaktschneiden aufweist, die die zumindest eine Energieversorgungsschnittstelle bilden und die bei einer Anordnung des Einfassungsdrahts an der zumindest einen Aufnahmeeinheit den Einfassungsdraht elektrisch kontaktieren. Beispielsweise ist es denkbar, dass die Kontaktstifte oder Kontaktschneiden der zumindest einen Aufnahmeeinheit infolge einer Anordnung des Einfassungsdrahts an der zumindest einen Aufnahmeeinheit eine Isolierung des Einfassungsdrahts durchtrennen, um einen elektrischen Kontakt herzustellen. Ebenfalls ist es denkbar, dass die zumindest eine Energieversorgungsschnittstelle als kontaktlose Energieversorgungsschnittstelle ausgebildet ist, insbesondere als induktive Energieversorgungsschnittstelle, wobei die zumindest eine Energieversorgungsschnittstelle vorzugsweise in einem die zumindest eine Aufnahmeausnehmung begrenzenden Randbereich angeordnet ist. Weitere, einem Fachmann als sinnvoll erscheinende Ausgestaltungen der zumindest einen Energieversorgungsschnittstelle zu einer einteiligen Ausgestaltung mit der zumindest einen Aufnahmeeinheit sind ebenfalls denkbar. Mittels der erfindungsgemäßen Ausgestaltung kann vorteilhaft eine einfache elektrische Verbindung zur Energieversorgung der zumindest einen Sensoreinheit direkt infolge einer Anordnung des Einfassungsdrahts an der zumindest einen Aufnahmeeinheit realisiert werden.

Zudem wird vorgeschlagen, dass die Energieversorgungsschnittstelle als kontaktlose Energieübertragungsschnittstelle ausgebildet ist, mittels derer in einem an der Aufnahmeeinheit angeordneten Zustand des Einfassungsdrahts elektrisehe Energie zu einer Energieversorgung zumindest der Sensoreinheit übertragbar ist. Vorzugsweise ist die Energieübertragungsschnittstelle als induktive Energieübertragungsschnittstelle ausgebildet. Es ist jedoch auch denkbar, dass die Energieübertragungsschnittstelle eine andere, einem Fachmann als sinnvoll erscheinende Ausgestaltung aufweist, wie beispielsweise eine Ausgestaltung als kapazitive Energieübertragungsschnittstelle o. dgl. Vorzugsweise ist die kontaktlose Energieübertragungsschnittstelle zumindest teilweise in die zumindest eine Aufnahmeeinheit integriert. Mittels der erfindungsgemäßen Ausgestaltung kann vorteilhaft eine Energieübertragung ermöglicht werden, die vorteilhaft unempfindlich gegen Umwelteinflüsse, insbesondere Wasser, ist.

Des Weiteren wird vorgeschlagen, dass die Aufnahmeeinheit zumindest ein Sicherungselement aufweist, das den Einfassungsdraht in einem am Grundkörper und/oder an der Fixierungseinheit angeordneten Zustand mittels einer formschlüssigen und/oder kraftschlüssigen Verbindung sichert. Das zumindest eine Sicherungselement kann als Sicherungsclip, als Klettelement, als Rastelement, als Klemmelement, als Spannverschlusselement, als Magnetsicherungselement o.dgl. ausgebildet sein. Mittels der erfindungsgemäßen Ausgestaltung kann vorteilhaft ein ungewolltes Lösen des Einfassungsdrahts von dem zumindest einen Grundkörper und/oder von der zumindest einen Fixierungseinheit erreicht werden.

Ferner wird vorgeschlagen, dass die Sensoreinheit stoßgeschützt und/oder stoßgedämpft am Grundkörper angeordnet ist. Vorzugsweise umfasst die Gartensensorvorrichtung zumindest ein Dämpfungselement, das dazu vorgesehen ist, die zumindest eine Sensoreinheit zumindest teilweise stoßgeschützt und/oder stoßgedämpft aufzunehmen. Das zumindest eine Dämpfungselement kann als Elastomer, als Federelement, als Schaum o. dgl. ausgebildet sein. Bevorzugt umgibt das zumindest eine Dämpfungselement die zumindest eine Sensoreinheit zumindest zu einem Großteil. Mittels der erfindungsgemäßen Ausgestaltung kann die zumindest eine Sensoreinheit zumindest teilweise vor Stoßeinwirkungen geschützt werden. Zudem kann vorteilhaft eine Schwingungsisolierung der zumindest einen Sensoreinheit erreicht werden.

Zudem wird vorgeschlagen, dass die Gartensensorvorrichtung zumindest eine Schlagfläche zu einer Ermöglichung einer Einwirkung von einer Eintreibkraft zu einem Einbringen der Fixierungseinheit, insbesondere zumindest eines Fixierelements der Fixierungseinheit, in einen Untergrund umfasst. Die zumindest eine Schlagfläche ist vorzugsweise zu einer Ermöglichung einer Einwirkung von einer Eintreibkraft, die mittels eines Eintreibwerkzeugs, insbesondere eines Hammers, von einer Person auf die Schlagfläche ausübbar ist, vorgesehen. Bevorzugt erstreckt sich die zumindest eine Schlagfläche zumindest im Wesentlichen quer, insbesondere senkrecht, zu einer Haupterstreckungsrichtung der zumindest einen Fixierungseinheit. Unter "im Wesentlichen quer" soll hier insbesondere eine Ausrichtung einer Richtung und/oder einer Achse relativ zu einer Bezugsrichtung und/oder einer Bezugsachse verstanden werden, wobei die Ausrichtung der Richtung und/oder der Achse zumindest verschieden von einer zumindest im Wesentlichen parallelen Ausrichtung zur Bezugsrichtung und/oder zur Bezugsachse ist und insbesondere windschief oder senkrecht zur Bezugsrichtung und/oder zur Bezugsachse ist. Die zumindest eine Schlagfläche ist bevorzugt an dem zumindest einen Grundkörper angeordnet, insbesondere einteilig mit dem zumindest einen Grundkörper ausgebildet. Vorzugsweise ist zumindest zwischen der Schlagfläche und der zumindest einen Sensoreinheit ein Dämpfungselement der Gartensensorvorrichtung angeordnet. Mittels der erfindungsgemäßen Ausgestaltung kann vorteilhaft eine sichere Krafteinwirkung auf die erfindungsgemäße Gartensensorvorrichtung ermöglicht werden, mittels derer die Gartensensorvorrichtung, insbesondere die Fixierungseinheit, komfortabel in einen Untergrund, insbesondere in ein Erdreich eines Gartens, eintreibbar ist.

Des Weiteren geht die Erfindung gemäß dem Anspruch 8 aus von einem Gartenbearbeitungssystem mit zumindest einem Einfassungsdraht zumindest zu einer Vorgabe einer Arbeitsbereichsgrenze für ein autonomes Gartenbearbeitungsgerät und mit der erfindungsgemäßen Gartensensorvorrichtung. Es wird vorgeschlagen, dass der Einfassungsdraht mittels der zumindest einen Gartensensorvorrichtung an einem Untergrund fixierbar ist. Besonders bevorzugt umfasst das Gartenbearbeitungssystem eine Vielzahl an Gartensensorvorrichtungen, die analog zu der bereits beschriebenen erfindungsgemäßen Gartensensorvorrichtung ausgebildet sind. Vorzugsweise umfasst das erfindungsgemäße Gartenbearbeitungssystem zumindest ein autonomes Gartenbearbeitungsgerät, insbesondere zumindest einen autonomen Rasenmäher. Das autonome Gartenbearbeitungsgerät weist insbesondere eine zumindest im Wesentlichen, einem Fachmann bereits bekannte Ausgestaltung und/oder Funktionsweise auf. Bevorzugt weist das erfindungsgemäße Gartenbearbeitungssystem zumindest eine Basisstation auf, die von dem autonomen Gartenbearbeitungsgerät zu einer Aufladung, wie beispielsweise eine Energieaufladung, eine Hilfsstoffaufladung (Dünger, Wasser o. dgl.), anfahrbar ist. Mittels der erfindungsgemäßen Ausgestaltung kann vorteilhaft eine sichere Fixierung des Einfassungsdrahts ermöglicht werden, wobei zusätzliche Elemente zu einer Fixierung des Einfassungsdrahts vorteilhaft eingespart werden können.

Ferner wird vorgeschlagen, dass die Gartensensorvorrichtung zumindest eine Kommunikationseinheit zu einer Übertragung von elektronischen Daten an eine Basisstation und/oder an das autonome Gartenbearbeitungsgerät umfasst, wobei eine Übertragung der elektronischen Daten mittels des Einfassungsdrahts erfolgt. Die Kommunikationseinheit ist bevorzugt als kabelgebundene Kommunikationseinheit ausgebildet, wie beispielsweise als LAN-Kommunikationseinheit, als USB-Kommunikationseinheit, als Powerline-Kommunikationseinheit, als Canbus-Kommunikationseinheit, als Ethernet-Kommunikationseinheit, als twisted pair Kabel-Kommunikationseinheit (CAT5 oder CAT6) o. dgl. Alternativ oder zusätzlich ist es denkbar, dass die zumindest eine Kommunikationseinheit zu einer kabellosen Datenübertragung vorgesehen ist. Die Kommunikationseinheit kann als WLAN-Kommunikationseinheit, als Bluetooth-Kommunikationseinheit, als Funk-Kommunikationseinheit, als RFID-Kommunikationseinheit, als NFC-Einheit, als Infrarot-Kommunikationseinheit, als Mobilfunknetz-Kommunikationseinheit, als Zigbee-Kommunikationseinheit o. dgl. ausgebildet sein. Besonders bevorzugt ist die Kommunikationseinheit zu einer bidirektionalen Datenübertragung vorgesehen. Mittels der erfindungsgemäßen Ausgestaltung kann vorteilhaft eine Datenübertragung an die Basisstation und/oder an das autonome Gartenbearbeitungsgerät ermöglicht werden, wobei die übertragenen Daten vorteilhaft durch die Basisstation und/oder das autonome Gartenbearbeitungsgerät auswertbar sind und beispielsweise zu einer Änderung eines Bearbeitungsprogramms des autonomen Gartenbearbeitungsgeräts, zu einer Informationsübermittlung an eine Person o. dgl. nutzbar sind.

Zudem wird vorgeschlagen, dass eine Energieübertragung zwischen dem Einfassungsdraht und der Energieversorgungsschnittstelle kabellos oder kabelgebunden erfolgt. Bei einer kabellosen Energieübertragung kann vorteilhaft eine einfache Kopplung des Einfassungsdrahts und der Energieversorgungsschnittstelle ermöglicht. Zudem kann vorteilhaft eine schmutzunempfindliche Energieübertragung zwischen dem Einfassungsdraht und der Energieversorgungsschnittstelle erreicht werden. Bei einer kabelgebundenen Energieübertragung kann vorteilhaft eine sicher Anordnung des Einfassungsdrahts an der Energieversorgungsschnittstelle realisiert werden.

Des Weiteren geht die Erfindung gemäß dem Anspruch 11 aus von einem Verfahren zu einer Fixierung eines Einfassungsdrahts an einem Untergrund, für ein erfindungsgemäßes Gartenbearbeitungssystem. Es wird vorgeschlagen, dass in zumindest einem Verfahrensschritt der Einfassungsdraht mittels einer Gartensensorvorrichtung, insbesondere der erfindungsgemäßen Gartensensorvorrichtung, an dem Untergrund befestigt wird. Mittels der erfindungsgemäßen Ausgestaltung kann vorteilhaft eine einfache und bauteilsparende Befestigung des Einfassungsdrahts am Untergrund realisiert werden.

Insbesondere können/kann die erfindungsgemäße Gartensensorvorrichtung gemäß dem Anspruch 1, das erfindungsgemäße Gartenbearbeitungssystem gemäß dem Anspruch 8 und/oder das erfindungsgemäße Verfahren gemäß dem Anspruch 11 zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:
- Fig. 1: ein erfindungsgemäßes Gartenbearbeitungssystem mit zumindest einem Einfassungsdraht zumindest zu einer Vorgabe einer Arbeitsbereichsgrenze für ein autonomes Gartenbearbeitungsgerät des erfindungsgemäßen Gartenbearbeitungssystems und mit zumindest einer erfindungsgemäßen Gartensensorvorrichtung in einer schematischen Darstellung,
- Fig. 2: eine Detailansicht einer Vielzahl von erfindungsgemäßen Gartensensorvorrichtungen zu einer Befestigung des Einfassungsdrahts in einer schematischen Darstellung,
- Fig. 3: eine Detailansicht der erfindungsgemäßen Gartensensorvorrichtung in einer schematischen Darstellung und
- Fig. 4: eine Detailansicht einer alternativen erfindungsgemäßen Gartensensorvorrichtung in einer schematischen Darstellung.

### Beschreibung der Ausführungsbeispiele

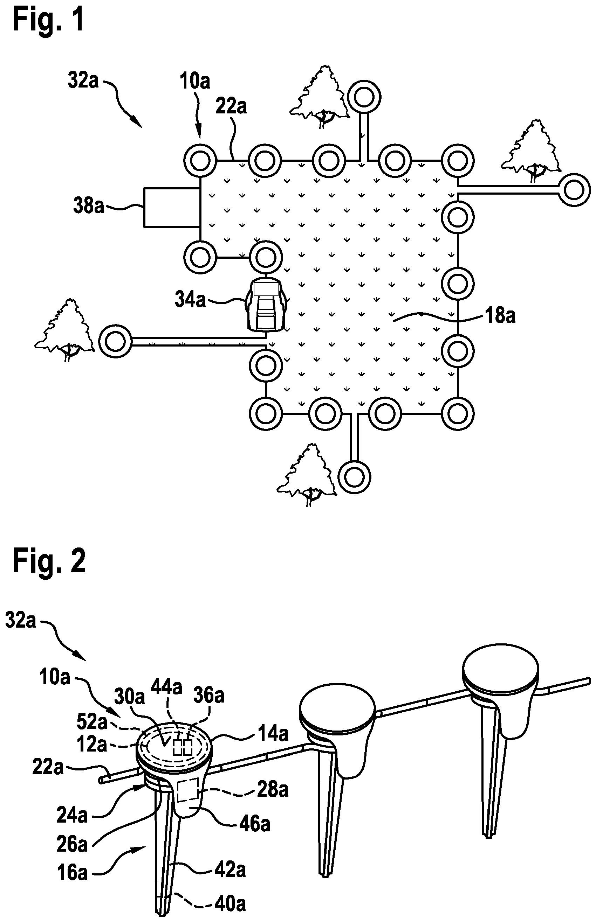

Figur 1 zeigt ein Gartenbearbeitungssystem 32a mit zumindest einem Einfassungsdraht 22a zumindest zu einer Vorgabe einer Arbeitsbereichsgrenze für ein autonomes Gartenbearbeitungsgerät 34a und mit zumindest einer Gartensensorvorrichtung 10a. Eine Ausgestaltung des Einfassungsdrahts 22a entspricht zumindest im Wesentlichen einer, einem Fachmann bereits bekannten Art und Weise. Der Einfassungsdraht 22a kann beispielsweise als Begrenzungskabel, als Begrenzungsdraht o. dgl. ausgebildet sein. Der Einfassungsdraht 22a ist mittels der zumindest einen Gartensensorvorrichtung 10a an einem Untergrund 18a fixierbar. Bevorzugt ist der Einfassungsdraht 22a mittels der zumindest einen Gartensensorvorrichtung 10a an einem Untergrund 18a eines Gartens, in dem das Gartenbearbeitungssystem 32a zumindest zu einem Großteil oder vollständig angeordnet ist, fixierbar. Das Gartenbearbeitungssystem 32a umfasst eine Vielzahl an Gartensensorvorrichtungen 10a, die dazu vorgesehen sind, den Einfassungsdraht 22a an einem Untergrund 18a zu fixieren. Die Gartensensorvorrichtungen 10a weisen bevorzugt eine zumindest im Wesentlichen analoge Ausgestaltung auf. Es ist jedoch auch denkbar, dass die Gartensensorvorrichtungen 10a verschieden ausgebildet sind, insbesondere hinsichtlich einer Ausgestaltung einer Sensoreinheit 12a der einzelnen Gartensensorvorrichtungen 10a.

Das Gartenbearbeitungssystem 32a umfasst das autonome Gartenbearbeitungsgerät 34a. Das in Figur 1 dargestellte autonome Gartenbearbeitungsgerät 34a ist als autonomer Rasenmäher ausgebildet. Es ist jedoch auch denkbar, dass das autonome Gartenbearbeitungsgerät 34a eine andere, einem Fachmann als sinnvoll erscheinende Ausgestaltung aufweist, wie beispielsweise eine Ausgestaltung als autonome Mulchmaschine, als autonome Laubsaugmaschine, als autonome Terrassenkehrmaschine, als autonome Fugenreinigungsmaschine, als autonome Bewässerungsmaschine o. dgl. Eine autonome Fortbewegung des autonomen Gartenbearbeitungsgeräts 34a und/oder eine autonome Bearbeitung einer Arbeitsfläche, insbesondere einer Gartenfläche, durch das autonome Gartenbearbeitungsgerät 34a erfolgt auf eine, einem Fachmann bereits bekannte Art und Weise, wie diese beispielsweise in DE 102014204091 A1, in DE 102013212605 A1, in DE 102012221572 A1 o. dgl. beschrieben sind/ist. Zu einer Aufladung des autonomen Gartenbearbeitungsgeräts 34a und/oder zu einer Datenverarbeitung und/oder -übertragung umfasst das Gartenbearbeitungssystem 32a zumindest eine Basisstation 38a. Es ist jedoch auch denkbar, dass das Gartenbearbeitungssystem 32a eine Vielzahl an Basisstationen 38a aufweist. Die Basisstation 38a weist eine, einem Fachmann bereits bekannte Ausgestaltung und/oder Funktionsweise auf, wie diese beispielsweise in DE 102013203712 A1, in PCT/EP2015/062403, in WO 2015/022672 A2 o. dgl. beschrieben sind/ist.

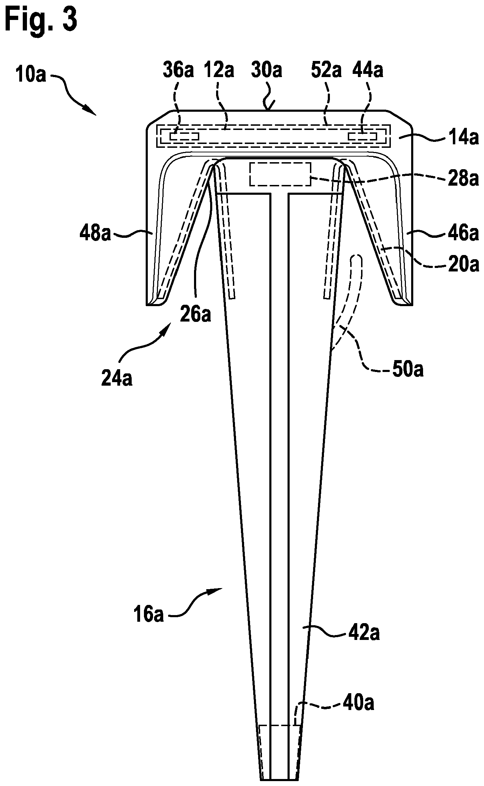

Die Gartensensorvorrichtung 10a umfasst zumindest eine Sensoreinheit 12a zu einer Erfassung von zumindest einer gartenspezifischen Kenngröße, zumindest einen Grundkörper 14a, an dem die zumindest eine Sensoreinheit 12a angeordnet ist, zumindest eine Fixierungseinheit 16a zumindest zu einer Fixierung des zumindest einen Grundkörpers 14a an einem Untergrund 18a, insbesondere an einer Gartenfläche eines Gartens, und zumindest eine Energieversorgungsschnittstelle 20a zu einer Verbindung mit einem Einfassungsdraht 22a zumindest zu einer Energieversorgung der zumindest einen Sensoreinheit 12a (vgl. Figuren 2 und 3). Eine Energieübertragung zwischen dem Einfassungsdraht 22a und der zumindest einen Energieversorgungsschnittstelle 20a erfolgt kabellos. Es ist jedoch auch denkbar, dass eine Energieübertragung zwischen dem Einfassungsdraht 22a und der zumindest einen Energieversorgungsschnittstelle 20a alternativ kabelgebunden, insbesondere mittels eines Stecker-Steckdosen-Prinzips, erfolgt. Die Energieversorgungsschnittstelle 20a ist insbesondere als induktive Energieversorgungsschnittstelle ausgebildet. Es ist jedoch auch denkbar, dass die Energieversorgungsschnittstelle 20a eine andere, einem Fachmann als sinnvoll erscheinende Ausgestaltung zu einer kabellosen Energieübertragung aufweist, wie beispielsweise eine Ausgestaltung als kapazitive Energieversorgungsschnittstelle o. dgl.

Die zumindest eine Fixierungseinheit 16a ist insbesondere einteilig mit dem zumindest einen Grundkörper 14a ausgebildet. Vorzugsweise sind der zumindest eine Grundkörper 14a und die zumindest eine Fixierungseinheit 16a mittels eines Spritzgießverfahrens einteilig miteinander ausgebildet. Es ist jedoch auch denkbar, dass der zumindest eine Grundkörper 14a und die zumindest eine Fixierungseinheit 16a in einer alternativen Ausgestaltung der Gartensensorvorrichtung 10a getrennt voneinander ausgebildet sind und mittels einer formschlüssigen und/oder kraftschlüssigen Verbindung miteinander verbunden sind, insbesondere aneinander fixiert sind.

Die zumindest eine Sensoreinheit 12a, insbesondere zumindest eine elektronisch bestückte Platine der zumindest einen Sensoreinheit 12a, ist zumindest teilweise unlösbar an dem zumindest einen Grundkörper 14a angeordnet (vgl. Figuren 2 und 3). Es ist jedoch auch denkbar, dass die zumindest eine Sensoreinheit 12a, insbesondere zumindest eine elektronisch bestückte Platine der zumindest eine Sensoreinheit 12a, in einer alternativen Ausgestaltung der Gartensensorvorrichtung 10a lösbar, insbesondere wechselbar, an dem zumindest einen Grundkörper 14a angeordnet ist. Die zumindest eine Sensoreinheit 12a ist vorzugsweise zumindest teilweise einteilig mit dem zumindest einen Grundkörper 14a und/oder mit der zumindest einen Fixierungseinheit 16a ausgebildet. Bevorzugt ist die zumindest eine Sensoreinheit 12a, insbesondere zumindest eine elektronisch bestückte Platine der zumindest einen Sensoreinheit 12a, mittels eines Spritzgießverfahrens einteilig mit dem zumindest einen Grundkörper 14a und/oder mit der zumindest einen Fixierungseinheit 16a ausgebildet. Die zumindest eine Sensoreinheit 12a ist insbesondere mit einem Werkstoff, aus dem der zumindest eine Grundkörper 14a und/oder die zumindest eine Fixierungseinheit 16a gebildet ist, umspritzt. Es ist jedoch auch denkbar, dass die zumindest eine Sensoreinheit 12a, insbesondere zumindest eine elektronisch bestückte Platine der zumindest einen Sensoreinheit 12a, mittels einer formschlüssigen und/oder kraftschlüssigen Verbindung in einer Aufnahme, insbesondere in einem Hohlraum, des zumindest einen Grundkörpers 14a und/oder der zumindest einen Fixierungseinheit 16a fixiert ist, wobei die Aufnahme insbesondere mittels eines Verschlusselements der Gartensensorvorrichtung 10a verschließbar ist, insbesondere luft- und/oder wasserdicht verschließbar ist. Weitere, einem Fachmann als sinnvoll erscheinende Anordnungen der zumindest einen Sensoreinheit 12a an dem zumindest einen Grundkörper 14a und/oder an der zumindest einen Fixierungseinheit 16a sind ebenfalls denkbar.

Die zumindest eine Sensoreinheit 12a ist stoßgeschützt und/oder stoßgedämpft an dem zumindest einen Grundkörper 14a angeordnet. Die Gartensensorvorrichtung 10a umfasst zumindest ein Dämpfungselement 52a, das an der zumindest einen Sensoreinheit 12a angeordnet ist. Vorzugsweise ist die zumindest eine Sensoreinheit 12a, insbesondere zumindest eine elektronisch bestückte Platine der zumindest einen Sensoreinheit 12a, in das zumindest eine Dämpfungselement 52a eingebettet. Es ist jedoch auch denkbar, dass die zumindest eine Sensoreinheit 12a, insbesondere zumindest eine elektronisch bestückte Platine der zumindest einen Sensoreinheit 12a, in einem an dem zumindest einen Grundkörper 14a und/oder an der zumindest einen Fixierungseinheit 16a angeordneten Zustand lediglich partiell an dem zumindest einen Dämpfungselement 52a oder an einer Vielzahl an Dämpfungselementen 52a der Gartensensorvorrichtung 10a anliegt.

Die zumindest eine Sensoreinheit 12a umfasst zumindest ein Sensorelement 40a, das zu einer Erfassung von zumindest einer gartenspezifischen Kenngröße vorgesehen ist (vgl. Figuren 2 und 3). Bevorzugt ist das zumindest eine Sensorelement 40a an der zumindest einen Fixierungseinheit 16a angeordnet, insbesondere lösbar, oder zumindest teilweise einteilig mit einem Fixierelement 42a der zumindest einen Fixierungseinheit 16a ausgebildet. Das zumindest eine Sensorelement 40a ist bevorzugt an einem als Erdnagel ausgebildeten Fixierelement 42a der zumindest einen Fixierungseinheit 16a angeordnet oder zumindest teilweise einteilig mit diesem ausgebildet. Es ist jedoch auch denkbar, dass das Fixierelement 42a der zumindest einen Fixierungseinheit 16a, an dem das zumindest eine Sensorelement 40a angeordnet ist oder mit dem das zumindest eine Sensorelement 40a zumindest teilweise einteilig ausgebildet ist, eine andere, einem Fachmann als sinnvoll erscheinende Ausgestaltung aufweist, wie beispielsweise eine Ausgestaltung als Zeltnagel, als Hering, als Erdhaken, als Erdanker o. dgl. Vorzugsweise weist die zumindest eine Sensoreinheit 12a eine Vielzahl an Sensorelementen 40a auf, die dazu vorgesehen sind, gartenspezifische Kenngrößen, insbesondere verschiedene gartenspezifische Kenngrößen, zu erfassen. Die Sensorelemente 40a können zumindest im Wesentlichen analog zueinander ausgebildet sein oder verschieden voneinander ausgebildet sein. Bevorzugt ist die zumindest eine Sensoreinheit 12a zu einer Erfassung von einer Vielzahl an gartenspezifischen Kenngrößen, insbesondere verschiedene gartenspezifische Kenngrößen, vorgesehen.

Das Gartenbearbeitungssystem 32a, insbesondere die Gartensensorvorrichtung 10a und/oder die zumindest eine Sensoreinheit 12a, umfasst zumindest eine Auswerteeinheit 44a, die dazu vorgesehen ist, die zumindest eine erfasste gartenspezifische Kenngröße auszuwerten (vgl. Figur 3). Die zumindest eine Auswerteeinheit 44a ist als elektronische Auswerteeinheit ausgebildet, wie beispielsweise als Prozessoreinheit, insbesondere als Mikroprozessoreinheit, o. dgl. Die zumindest eine Auswerteeinheit 44a weist eine, einem Fachmann bereits bekannte Ausgestaltung und/oder Funktionsweise auf. Vorzugsweise ist die zumindest eine Auswerteeinheit 44a auf einer elektronisch bestückten Platine der zumindest einen Sensoreinheit 12a angeordnet. Die zumindest eine mittels der zumindest einen Auswerteeinheit 44a ausgewertete gartenspezifische Kenngröße kann zu einer Beeinflussung einer Steuerung des autonomen Gartenbearbeitungsgeräts 34a, zu einer Informationsausgabe an einen Bediener und/oder zu einer Erstellung einer Übersicht/Karte in Abhängigkeit von der zumindest einen gartenspezifischen Kenngröße auf eine, einem Fachmann bereits bekannte Art und Weise genutzt und/oder weiterverarbeitet werden. Eine Erfassung, eine Auswertung und/oder eine Übertragung der zumindest einen gartenspezifischen Kenngröße erfolgt vorzugsweise automatisch. Es ist jedoch auch denkbar, dass eine Erfassung, eine Auswertung und/oder eine Übertragung der zumindest einen gartenspezifischen Kenngröße in Abhängigkeit von einem Bedienerbefehl erfolgt, wie beispielsweise durch einen manuell gestarteten Erfassungsvorgang, einen manuell gestarteten Auswertungsvorgang, einen manuell gestarteten Übertragungsvorgang o. dgl.

Die Gartensensorvorrichtung 10a umfasst ferner zumindest eine Aufnahmeeinheit 24a, mittels derer der Einfassungsdraht 22a an dem zumindest einen Grundkörper 14a und/oder an der zumindest einen Fixierungseinheit 16a anordenbar ist (vgl. Figur 3). Die zumindest eine Aufnahmeeinheit 24a begrenzt zumindest eine Aufnahmeausnehmung 26a, in der der Einfassungsdraht 22a anordenbar ist. Vorzugsweise umfasst die zumindest eine Aufnahmeeinheit 24a zumindest einen Fortsatz 46a, 48a, der sich bevorzugt ausgehend von dem zumindest einen Grundkörper 14a und/oder von der zumindest einen Fixierungseinheit 16a, insbesondere von zumindest einem Fixierelement 42a der zumindest einen Fixierungseinheit 16a, in eine von dem zumindest einen Grundkörper 14a und/oder von der zumindest einen Fixierungseinheit 16a abgewandte Richtung erstreckt. Vorzugsweise ist der zumindest eine Fortsatz 46a, 48a einteilig mit dem zumindest einen Grundkörper 14a ausgebildet. Alternativ oder zusätzlich ist der zumindest eine Fortsatz 46a, 48a einteilig mit der zumindest einen Fixierungseinheit 16a ausgebildet oder die zumindest eine Aufnahmeeinheit 24a umfasst einen weiteren Fortsatz 50a (in Figur 3 gestrichelt dargestellt), der einteilig mit der zumindest einen Fixierungseinheit 16a ausgebildet ist.

Bevorzugt begrenzen der zumindest eine Fortsatz 46a, 48a und der zumindest eine Grundkörper 14a und/oder das zumindest eine Fixierelement 42a der Fixierungseinheit 16a zusammen zumindest teilweise die zumindest eine Aufnahmeausnehmung 26a, in der der Einfassungsdraht 22a anordenbar ist. Insbesondere liegt der Einfassungsdraht 22a in zumindest einem in der Aufnahmeausnehmung 26a angeordneten Zustand zumindest teilweise an dem zumindest einen Fortsatz 46a, 48a, an dem zumindest einen Grundkörper 14a und/oder an der zumindest einen Fixierungseinheit 16a an. Der zumindest eine Fortsatz 46a, 48a weist bevorzugt zumindest eine Haupterstreckungsrichtung auf, die zumindest im Wesentlichen parallel oder zumindest im Wesentlichen quer zu einer Haupterstreckungsrichtung der zumindest einen Fixierungseinheit 16a verläuft. Besonders bevorzugt umfasst die zumindest eine Aufnahmeeinheit 24a eine Vielzahl an Fortsätzen 46a, 48a 50a, die zusammen mit dem zumindest einen Grundkörper 14a und/oder dem zumindest einen Fixierelement 42a der Fixierungseinheit 16a zumindest teilweise die zumindest eine Aufnahmeausnehmung 26a, in der der Einfassungsdraht 22a anordenbar ist, begrenzen. In dem in den Figuren 1 bis 3 dargestellten Ausführungsbeispiel umfasst die zumindest eine Aufnahmeeinheit 24a zumindest zwei Fortsätze 46a, 48a. Es ist auch denkbar, dass die zumindest eine Aufnahmeeinheit 24a einen weiteren Fortsatz umfasst, der beweglich gelagert ist und der dazu vorgesehen ist, zusammen mit dem zumindest einen Fortsatz 46a, 48a, mit dem zumindest einen Grundkörper 14a und/oder mit der zumindest einen Fixierungseinheit 16a die zumindest eine Aufnahmeausnehmung 26a, in der der Einfassungsdraht 22a anordenbar ist, zu begrenzen. Vorzugsweise können zumindest der zumindest eine Fortsatz 46a, 48a und der weitere Fortsatz zusammen eine Art von Schnappschäkel bilden, in der der Einfassungsdraht 22a anordenbar ist. Der Einfassungsdraht 22a ist in einem in der zumindest einen Aufnahmeausnehmung 26a angeordneten Zustand zumindest zu mehr als 50 %, bevorzugt zu mehr als 70 % und besonders bevorzugt zu mehr als 90 % einer maximalen Umfangserstreckung des Einfassungsdrahts 22a von der zumindest einen Aufnahmeeinheit 24a , dem zumindest einen Grundkörper 14a und/oder der zumindest einen Fixierungseinheit 16a umgeben.

Die zumindest eine Aufnahmeeinheit 24a ist zumindest teilweise einteilig mit der zumindest einen Energieversorgungsschnittstelle 20a ausgebildet, wobei infolge einer Anordnung des Einfassungsdrahts 22a an der zumindest einen Aufnahmeeinheit 24a zumindest eine elektrische Verbindung zur Energieversorgung der zumindest einen Sensoreinheit 12a herstellbar ist. Die zumindest eine Energieversorgungsschnittstelle 20a ist als kontaktlose Energieübertragungsschnittstelle ausgebildet, mittels derer in einem an der zumindest einen Aufnahmeeinheit 24a angeordneten Zustand des Einfassungsdrahts 22a elektrische Energie zu einer Energieversorgung zumindest der zumindest einen Sensoreinheit 12a übertragbar ist. Vorzugsweise ist die zumindest eine Energieversorgungsschnittstelle 20a zumindest teilweise in der Aufnahmeausnehmung 26a angeordnet, die von der zumindest einen Aufnahmeeinheit 24a zumindest teilweise begrenzt wird. Die zumindest eine Energieversorgungsschnittstelle 20a ist vorzugsweise in einem die zumindest eine Aufnahmeausnehmung 26a begrenzenden Randbereich angeordnet, insbesondere zumindest teilweise in dem zumindest einen Fortsatz 46a, 48a, in dem zumindest einen Grundkörper 14a und/oder in der zumindest einen Fixierungseinheit 16a, insbesondere in dem Fixierelement 42a. Weitere, einem Fachmann als sinnvoll erscheinende Ausgestaltungen der zumindest einen Energieversorgungsschnittstelle 20a zu einer zumindest teilweisen einteiligen Ausgestaltung mit der zumindest einen Aufnahmeeinheit 24a sind ebenfalls denkbar.

Die zumindest eine Aufnahmeeinheit 24a weist zumindest ein Sicherungselement 28a (Figuren 2 und 3) auf, das den Einfassungsdraht 22a in einem an dem zumindest einen Grundkörper 14a und/oder an der zumindest einen Fixierungseinheit 16a angeordneten Zustand mittels einer formschlüssigen und/oder kraftschlüssigen Verbindung sichert. Das zumindest eine Sicherungselement 28a kann als Rastelement, als Klettverschlusselement, als Clipelement o. dgl. ausgebildet sein. Die zumindest eine Aufnahmeeinheit 24a kann eine Vielzahl an Sicherungselementen 28a aufweisen.

Die Gartensensorvorrichtung 10a umfasst zumindest eine Kommunikationseinheit 36a zu einer Übertragung von elektronischen Daten an die Basisstation 38a und/oder an das autonome Gartenbearbeitungsgerät 34a, wobei eine Übertragung der elektronischen Daten mittels des Einfassungsdrahts 22a erfolgt. Es ist jedoch auch denkbar, dass die zumindest eine Kommunikationseinheit 36a alternativ oder zusätzlich zu einer kabellosen Übertragung von elektronischen Daten vorgesehen ist. Mittels der zumindest einen Kommunikationseinheit 36a können vorteilhaft erfasste gartenspezifische Kenngrößen zu einer Weiterverarbeitung, zu einer Informationsausgabe, zu einer Übersichtsdarstellung, zu einer Kartierung eines Arbeitsbereichs, zu einer Statistikerhebung o. dgl. an die Basisstation 38a, an das autonome Gartenbearbeitungsgerät 34a, an eine externe Einheit o. dgl. übertragen werden. Mittels der zumindest einen Kommunikationseinheit 36a können insbesondere elektronische Steuerbefehle an die Gartensensorvorrichtung 10a übertragen wird. Ferner ist es denkbar, dass die Gartensensorvorrichtung 10a eine Ausgabeeinheit (hier nicht näher dargestellt) aufweist, die zu einer Ausgabe von Informationen an einen Bediener vorgesehen ist. Die Ausgabeeinheit kann als optische und/oder als akustische Ausgabeeinheit ausgebildet sein. Vorzugsweise kann die Ausgabeeinheit an dem zumindest einen Grundkörper 14a angeordnet sein. Zudem ist es denkbar, dass die Gartensensorvorrichtung 10a eine Schädlingsvertreibungseinheit (hier nicht näher dargestellt) aufweist, die dazu vorgesehen ist, Schädlinge aus dem Garten zu vertreiben. Die Schädlingsvertreibungseinheit kann als akustische, als optische und/oder als haptische Schädlingsvertreibungseinheit ausgebildet sein, wie beispielsweise als Wasserstrahleinheit, als Vibrationseinheit, als Geräuscherzeugungseinheit o. dgl. Die Schädlingsvertreibungseinheit kann an dem zumindest einen Grundkörper 14a und/oder an der zumindest einen Fixierungseinheit 16a angeordnet sein.

Ein Verfahren zu einer Fixierung eines Einfassungsdrahts 22a an einem Untergrund 18a, für das Gartenbearbeitungssystem 32a umfasst zumindest einen Verfahrensschritt, in dem der Einfassungsdraht 22a an der Gartensensorvorrichtung 10a angeordnet wird. Der Einfassungsdraht 22a wird im Bereich der zumindest einen Aufnahmeeinheit 24a in der zumindest einen Aufnahmeausnehmung 26a angeordnet. Der Einfassungsdraht 22a wird im Bereich der zumindest einen Aufnahmeeinheit 24a einfach oder mehrfach um den zumindest einen Grundkörper 14a und/oder um die zumindest eine Fixierungseinheit 16a gewickelt (vgl. Figur 2), insbesondere innerhalb der zumindest einen Aufnahmeausnehmung 26a. In zumindest einem Verfahrensschritt wird der Einfassungsdraht 22a mittels der Gartensensorvorrichtung 10a an dem Untergrund 18a befestigt. Die zumindest eine Fixierungseinheit 16a wird zumindest teilweise in den Untergrund 18a eingetrieben. Infolge einer Anordnung des Einfassungsdrahts 22a an dem zumindest einen Grundkörper 14a und/oder an der zumindest einen Fixierungseinheit 16a ist der Einfassungsdraht 22a nach einem Eintreiben der zumindest einen Fixierungseinheit 16a in den Untergrund 18a an dem Untergrund 18a fixiert.

Die Gartensensorvorrichtung 10a umfasst zumindest eine Schlagfläche 30a zu einer Ermöglichung einer Einwirkung von einer Eintreibkraft zu einem Einbringen der zumindest einen Fixierungseinheit 16a in den Untergrund 18a (Figuren 2 und 3). Die Schlagfläche 30a erstreckt sich zumindest im Wesentlichen senkrecht zur Haupterstreckungsrichtung der zumindest einen Fixierungseinheit 16a. Die Schlagfläche 30a ist an dem zumindest einen Grundkörper 14a angeordnet, insbesondere einteilig mit diesem ausgebildet. Die Schlagfläche ist 30a auf einer der zumindest einen Fixierungseinheit 16a abgewandten Seit des zumindest einen Grundkörpers 14a am Grundkörper 14a angeordnet.

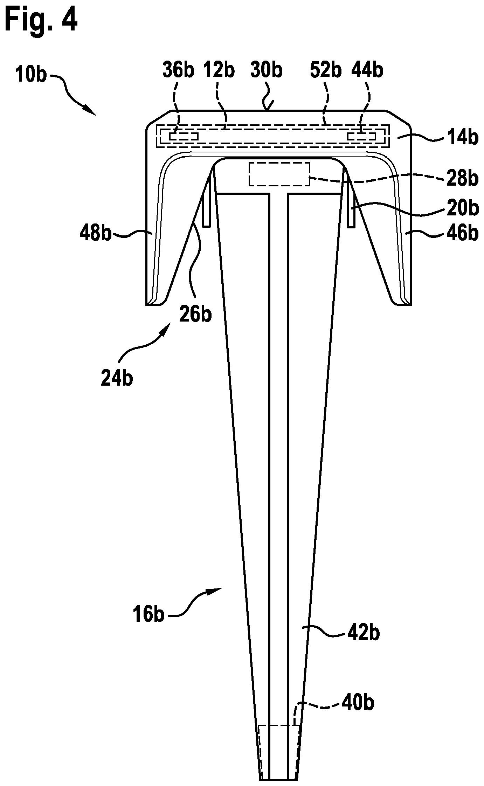

In Figur 4 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In dem Ausführungsbeispiel der Figur 4 ist der Buchstabe a durch den Buchstaben b ersetzt.

Figur 4 zeigt eine alternative Ausgestaltung einer Gartensensorvorrichtung 10b. Die Gartensensorvorrichtung 10b umfasst zumindest eine Sensoreinheit 12b zu einer Erfassung von zumindest einer gartenspezifischen Kenngröße, zumindest einen Grundkörper 14b, an dem die zumindest eine Sensoreinheit 12b angeordnet ist, zumindest eine Fixierungseinheit 16b zumindest zu einer Fixierung des zumindest einen Grundkörpers 14b an einem Untergrund (hier nicht näher dargestellt), insbesondere an einer Gartenfläche eines Gartens, und zumindest eine Energieversorgungsschnittstelle 20b zu einer Verbindung mit einem Einfassungsdraht (hier nicht näher dargestellt) zumindest zu einer Energieversorgung der zumindest einen Sensoreinheit 12b. Die Gartensensorvorrichtung 10b umfasst ferner zumindest eine Aufnahmeeinheit 24b, mittels derer der Einfassungsdraht an dem Grundkörper 14b und/oder an der Fixierungseinheit 16b anordenbar ist. Die zumindest eine Energieversorgungsschnittstelle 20b ist zumindest teilweise einteilig mit der zumindest einen Aufnahmeeinheit 24b ausgebildet. Die in Figur 4 dargestellt Gartensensorvorrichtung 10b weist eine zumindest im Wesentlichen analoge Ausgestaltung zu der in der Beschreibung der Figuren 1 bis 3 beschriebenen Gartensensorvorrichtung 10a auf. Im Unterschied zu der in der Beschreibung der Figuren 1 bis 3 beschriebene Gartensensorvorrichtung 10a, weist die in Figur 4 dargestellt Gartensensorvorrichtung 10b eine kabelgebundene Energieversorgungsschnittstelle 20b auf. Die zumindest eine Energieversorgungsschnittstelle 20b ist insbesondere steckerartig oder steckdosenartig ausgebildet. Eine Energieübertragung zwischen dem Einfassungsdraht und der zumindest einen Energieversorgungsschnittstelle 20b erfolgt in einem an der zumindest einen Aufnahmeeinheit 24b angeordneten Zustand des Einfassungsdrahts kontaktgebunden über eine Steckerverbindung zwischen dem Einfassungsdraht und der zumindest einen Energieversorgungsschnittstelle 20b. Es ist jedoch auch denkbar, dass die zumindest eine Energieversorgungsschnittstelle 20b als Kontaktstifte oder Kontaktschneiden ausgebildet ist, die bei einer Anordnung des Einfassungsdrahts an der zumindest einen Aufnahmeeinheit 24b den Einfassungsdraht elektrisch kontaktieren. Beispielsweise ist es denkbar, dass die Kontaktstifte oder Kontaktschneiden infolge einer Anordnung des Einfassungsdrahts an der zumindest einen Aufnahmeeinheit 24b eine Isolierung des Einfassungsdrahts durchtrennen, um einen elektrischen Kontakt herzustellen. Weitere, einem Fachmann als sinnvoll erscheinende Ausgestaltung der zumindest einen Energieversorgungsschnittstelle 20b ist ebenfalls denkbar. Hinsichtlich weiterer Merkmale und Funktionen der in der Figur 4 dargestellten Gartensensorvorrichtung 10b darf auf die Beschreibung der in den Figuren 1 bis 3 dargestellten Gartensensorvorrichtung 10a verwiesen werden.

## Patentansprüche

1. Gartensensorvorrichtung mit zumindest einer Sensoreinheit (12a; 12b) zu einer Erfassung von zumindest einer gartenspezifischen Kenngröße, mit zumindest einem Grundkörper (14a; 14b), an dem die Sensoreinheit (12a; 12b) angeordnet ist, mit zumindest einer Fixierungseinheit (16a; 16b) zumindest zu einer Fixierung des Grundkörpers (14a; 14b) an einem Untergrund (18a) und mit zumindest einer Energieversorgungsschnittstelle (20a; 20b) zu einer Verbindung mit einem Einfassungsdraht (22a) zumindest zu einer Energieversorgung der Sensoreinheit (12a; 12b), wobei der Einfassungsdraht (22a) als ein energieführender Begrenzungsdraht oder als ein energieführendes Begrenzungskabel ausgebildet ist, der oder das zumindest dazu vorgesehen ist, zumindest einen Arbeitsbereich eines autonomen Gartenbearbeitungsgeräts zu begrenzen oder einem autonomen Gartenbearbeitungsgeräts eine Fahrstrecke vorzugeben, **gekennzeichnet durch** zumindest eine Aufnahmeeinheit (24a; 24b), mittels derer der Einfassungsdraht (22a) an dem Grundkörper (14a; 14b) und/oder an der Fixierungseinheit (16a; 16b) anordenbar ist.

2. Gartensensorvorrichtung nach Anspruch 1, **dadurch gekennzeichnet, dass** die Aufnahmeeinheit (24a; 24b) zumindest eine Aufnahmeausnehmung (26a; 26b) begrenzt, in der der Einfassungsdraht (22a) anordenbar ist.

3. Gartensensorvorrichtung nach Anspruch 1 oder 2, **dadurch gekennzeichnet, dass** die Aufnahmeeinheit (24a; 24b) zumindest teilweise einteilig mit der Energieversorgungsschnittstelle (20a; 20b) ausgebildet ist, wobei infolge einer Anordnung des Einfassungsdrahts (22a) an der Aufnahmeeinheit (24a; 24b) zumindest eine elektrische Verbindung zur Energieversorgung der Sensoreinheit (12a; 12b) herstellbar ist.

4. Gartensensorvorrichtung nach einem der vorhergehenden Ansprüche, **dadurch gekennzeichnet, dass** die Energieversorgungsschnittstelle (20a) als kontaktlose Energieübertragungsschnittstelle ausgebildet ist, mittels derer in einem an der Aufnahmeeinheit (24a) angeordneten Zustand des Einfassungsdrahts (22a) elektrische Energie zu einer Energieversorgung zumindest der Sensoreinheit (12a) übertragbar ist.

5. Gartensensorvorrichtung nach einem der vorhergehenden Ansprüche, **dadurch gekennzeichnet, dass** die Aufnahmeeinheit (24a; 24b) zumindest ein Sicherungselement (28a; 28b) aufweist, das den Einfassungsdraht (22a) in einem am Grundkörper (14a; 14b) und/oder an der Fixierungseinheit (16a; 16b) angeordneten Zustand mittels einer formschlüssigen und/oder kraftschlüssigen Verbindung sichert.

6. Gartensensorvorrichtung nach einem der vorhergehenden Ansprüche, **dadurch gekennzeichnet, dass** die Sensoreinheit (12a; 12b) stoßgeschützt und/oder stoßgedämpft am Grundkörper (14a; 14b) angeordnet ist.

7. Gartensensorvorrichtung nach einem der vorhergehenden Ansprüche, **gekennzeichnet durch** zumindest eine Schlagfläche (30a; 30b) zu einer Ermöglichung einer Einwirkung von einer Eintreibkraft zu einem Einbringen der Fixierungseinheit (16a; 16b) in einen Untergrund (18a).

8. Gartenbearbeitungssystem mit zumindest einem Einfassungsdraht (22a) zumindest zu einer Vorgabe einer Arbeitsbereichsgrenze für ein autonomes Gartenbearbeitungsgerät (34a) und mit zumindest einer Gartensensorvorrichtung, nach einem der Ansprüche 1 bis 7, wobei der Einfassungsdraht (22a) als ein energieführender Begrenzungsdraht oder als ein energieführendes Begrenzungskabel ausgebildet ist, der oder das zumindest dazu vorgesehen ist, zumindest einen Arbeitsbereich des autonomen Gartenbearbeitungsgeräts (34a) zu begrenzen oder dem autonomen Gartenbearbeitungsgerät (34a) eine Fahrstrecke vorzugeben, **dadurch gekennzeichnet, dass** der Einfassungsdraht (22a) mittels der zumindest einen Gartensensorvorrichtung an einem Untergrund (18a) fixierbar ist.

9. Gartenbearbeitungssystem nach Anspruch 8, **dadurch gekennzeichnet, dass** die Gartensensorvorrichtung zumindest eine Kommunikationseinheit (36a; 36b) zu einer Übertragung von elektronischen Daten an eine Basisstation (38a) und/oder an das autonome Gartenbearbeitungsgerät (34a) umfasst, wobei eine Übertragung der elektronischen Daten mittels des Einfassungsdrahts (22a) erfolgt.

10. Gartenbearbeitungssystem nach Anspruch 8 oder 9, **dadurch gekennzeichnet, dass** eine Energieübertragung zwischen dem Einfassungsdraht (22a) und der Energieversorgungsschnittstelle (20a; 20b) kabellos oder kabelgebunden erfolgt.

11. Verfahren zu einer Fixierung eines Einfassungsdrahts (22a) an einem Untergrund (18a), für ein Gartenbearbeitungssystem nach einem der Ansprüche 8 bis 10, wobei der Einfassungsdraht (22a) als ein energieführender Begrenzungsdraht oder als ein energieführendes Begrenzungskabel ausgebildet ist, der oder das zumindest dazu vorgesehen ist, zumindest einen Arbeitsbereich des autonomen Gartenbearbeitungsgeräts (34a) zu begrenzen oder dem autonomen Gartenbearbeitungsgerät (34a) eine Fahrstrecke vorzugeben, **dadurch gekennzeichnet, dass** in zumindest einem Verfahrensschritt der Einfassungsdraht (22a) mittels einer Gartensensorvorrichtung nach einem der Ansprüche 1 bis 7, an dem Untergrund (18a) befestigt wird.

## Claims

1. Garden sensor apparatus having at least one sensor unit (12a; 12b) for detecting at least one garden-specific characteristic variable, having at least one base body (14a; 14b), on which the sensor unit (12a; 12b) is arranged, having at least one fixing unit (16a; 16b) at least for fixing the base body (14a; 14b) to an underlying surface (18a) and having at least one energy supply interface (20a; 20b) for connecting to a border wire (22a) at least for supplying energy to the sensor unit (12a; 12b), wherein the border wire (22a) is formed as an energy-supplying delimiting wire or as an energy-supplying delimiting cable, which is at least provided to delimit at least one working area of an autonomous garden processing device or to specify a route to an autonomous garden processing device, **characterized by** at least one receiving unit (24a; 24b), by means of which the border wire (22a) is able to be arranged on the base body (14a; 14b) and/or on the fixing unit (16a; 16b).

2. Garden sensor apparatus according to Claim 1, **characterized in that** the receiving unit (24a; 24b) delimits at least one receiving recess (26a; 26b), in which the border wire (22a) is able to be arranged.

3. Garden sensor apparatus according to Claim 1 or 2, **characterized in that** the receiving unit (24a; 24b) is formed at least partly in one piece with the energy supply interface (20a; 20b), wherein, as a result of the border wire (22a) being arranged on the receiving unit (24a; 24b), at least one electrical connection for supplying energy to the sensor unit (12a; 12b) is able to be established.

4. Garden sensor apparatus according to one of the preceding claims, **characterized in that** the energy supply interface (20a) is formed as a contactless energy transmission interface, by means of which, in a state in which the border wire (22a) is arranged on the receiving unit (24a), electrical energy is able to be transmitted to supply energy at least to the sensor unit (12a).

5. Garden sensor apparatus according to one of the preceding claims, **characterized in that** the receiving unit (24a; 24b) has at least one securing element (28a; 28b), which secures the border wire (22a) in a state arranged on the base body (14a; 14b) and/or on the fixing unit (16a; 16b) by means of a form-fitting and/or force-fitting connection.

6. Garden sensor apparatus according to one of the preceding claims, **characterized in that** the sensor unit (12a; 12b) is arranged on the base body (14a; 14b) in a shock-protected and/or shock-damped manner.

7. Garden sensor apparatus according to one of the preceding claims, **characterized by** at least one striking surface (30a; 30b) for making possible an action of a driving force for introducing the fixing unit (16a; 16b) into an underlying surface (18a).

8. Garden processing system having at least one border wire (22a) at least for specifying a working area limit for an autonomous garden processing device (34a) and having at least one garden sensor apparatus, according to one of Claims 1 to 7, wherein the border wire (22a) is formed as an energy-supplying delimiting wire or as an energy-supplying delimiting cable, which is at least provided to delimit at least one working area of the autonomous garden processing device (34a) or to specify a route to the autonomous garden processing device (34a), **characterized in that** the border wire (22a) is able to be fixed to an underlying surface (18a) by means of the at least one garden sensor apparatus.

9. Garden processing system according to Claim 8, **characterized in that** the garden sensor apparatus comprises at least one communication unit (36a; 36b) for transmitting electronic data to a base station (38a) and/or to the autonomous garden processing device (34a), wherein the electronic data is transmitted by means of the border wire (22a).

10. Garden processing system according to Claim 8 or 9, **characterized in that** energy is transmitted between the border wire (22a) and the energy supply interface (20a; 20b) in a wireless or wired manner.

11. Method for fixing a border wire (22a) to an underlying surface (18a), for a garden processing system according to one of Claims 8 to 10, wherein the border wire (22a) is formed as an energy-supplying delimiting wire or as an energy-supplying delimiting cable, which is at least provided to delimit at least one working area of the autonomous garden processing device (34a) or to specify a route to the autonomous garden processing device (34a), **characterized in that**, in at least one method step, the border wire (22a) is fastened to the underlying surface (18a) by means of a garden sensor apparatus according to one of Claims 1 to 7.

## Revendications

1. Dispositif de capteur de jardin comportant au moins une unité de détection (12a ; 12b) destinée à détecter au moins une grandeur caractéristique spécifique du jardin, comportant au moins un corps de base (14a ; 14b) sur lequel est disposée l'unité de capteur (12a ; 12b), au moins une unité de fixation (16a ; 16b) au moins destinée à fixer le corps de base (14a ; 14b) sur un sous-sol (18a) et au moins une interface d'alimentation en énergie (20a ; 20b) destinée à établir une liaison avec un fil de bordure (22a) servant au moins à alimenter en énergie l'unité de capteur (12a ; 12b), dans lequel le fil de bordure (22a) est réalisé sous la forme d'un fil de délimitation conducteur d'énergie ou d'un câble de délimitation conducteur d'énergie qui est au moins prévu pour délimiter au moins une zone de travail d'un outil de jardinage autonome ou pour prédéfinir un trajet de déplacement pour un outil de jardinage autonome, **caractérisé par** au moins une unité de logement (24a ; 24b) au moyen de laquelle le fil de bordure (22a) peut être mis en place sur le corps de base (14a ; 14b) et/ou sur l'unité de fixation (16a ; 16b).

2. Dispositif de capteur de jardin selon la revendication 1, **caractérisé en ce que** l'unité de logement (24a ; 24b) délimite au moins un évidement de logement (26a ; 26b) dans lequel le fil de bordure (22a) peut être mis en place.

3. Dispositif de capteur de jardin selon la revendication 1 ou 2, **caractérisé en ce que** l'unité de logement (24a ; 24b) est réalisée au moins partiellement d'un seul tenant avec l'interface d'alimentation en énergie (20a ; 20b), dans lequel au moins une liaison électrique peut être établie pour alimenter en énergie l'unité de capteur (12a ; 12b) du fait de la mise en place du fil de bordure (22a) sur l'unité de logement (24a ; 24b).

4. Dispositif de capteur de jardin selon l'une des revendications précédentes, **caractérisé en ce que** l'interface d'alimentation en énergie (20a) est réalisée sous la forme d'une interface d'alimentation en énergie sans contact au moyen de laquelle de l'énergie électrique peut être transmise à une alimentation électrique d'au moins l'unité de capteur (12a) dans un état dans lequel le fil de bordure (22a) est mis en place sur l'unité de logement (24a).

5. Dispositif de capteur de jardin selon l'une des revendications précédentes, **caractérisé en ce que** l'unité de logement (24a ; 24b) comporte au moins un élément de blocage (28a ; 28b) qui bloque le fil de bordure (22a) au moyen d'une liaison par complémentarité de forme et/ou par complémentarité de force dans un état dans lequel il est mis en place sur le corps de base (14a ; 14b) et/ou sur l'unité de fixation (16a ; 16b).

6. Dispositif de capteur de jardin selon l'une des revendications précédentes, **caractérisé en ce que** l'unité de capteur (12a ; 12b) est disposée sur le corps de base (14a ; 14b) de manière à ce qu'elle soit protégée contre les chocs et/ou à amortir les chocs.

7. Dispositif de capteur de jardin selon l'une des revendications précédentes, **caractérisé par** au moins une surface de butée (30a ; 30b) destinée à permettre l'action d'une force motrice pour l'introduction de l'unité de fixation (16a ; 16b) dans un sous-sol (18a).

8. Système de jardinage comportant au moins un fil de bordure (22a) au moins destiné à définir une limite de zone de travail pour un outil de jardinage autonome (34a) et au moins un dispositif de capteur de jardin selon l'une des revendications 1 à 7, dans lequel le fil de bordure (22a) est réalisé sous la forme d'un fil de délimitation conducteur d'énergie ou d'un câble de délimitation conducteur d'énergie qui est au moins prévu pour délimiter au moins une zone de travail de l'outil de jardinage autonome (34a) ou pour prédéfinir un trajet de déplacement pour l'outil de jardinage autonome (34a), **caractérisé en ce que** le fil de bordure (22a) peut être fixé à un sous-sol (18a) au moyen dudit au moins un dispositif de capteur de jardin.

9. Système de jardinage selon la revendication 8, **caractérisé en ce que** le dispositif de capteur de jardin comprend au moins une unité de communication (36a ; 36b) destinée à transmettre des données électroniques à une station de base (38a) et/ou à l'outil de jardinage autonome (34a), dans une transmission des données électroniques est effectuée au moyen du fil de bordure (22a).

10. Système de jardinage selon la revendication 8 ou 9, **caractérisé en ce qu'**une transmission d'énergie sans fil ou par câble est effectuée entre le fil de bordure (22a) et l'interface d'alimentation en énergie (20a ; 20b).

11. Procédé de fixation d'un fil de bordure (22a) sur un sous-sol (18a) pour un système de jardinage selon l'une des revendications 8 à 10, dans lequel le fil bordure (22a) est réalisé sous la forme d'un fil de délimitation conducteur d'énergie ou d'un câble de délimitation conducteur d'énergie qui est au moins prévu pour délimiter au moins une zone de travail de l'outil de jardinage autonome (34a) pour le jardinage ou pour prédéfinir un trajet de déplacement pour l'outil de jardinage autonome (34a), **caractérisé en ce que**, lors d'au moins une étape de procédé, le fil de bordure (22a) est fixé au sous-sol (18a) au moyen d'un dispositif de capteur de jardin selon l'une des revendications 1 à 7.
